# EUROPÄISCHE PATENTSCHRIFT

(11) **EP 0 402 820 B1**
(45) Veröffentlichungstag und Bekanntmachung des Hinweises auf die Patenterteilung: **12.01.1994**
(21) Anmeldenummer: 90110978.5
(22) Anmeldetag: 11.06.1990
(51) Int. Cl.: B60G 17/04, B60G 17/015

(54) **Kraftfahrzeug mit Niveauregeleinrichtung**
Vehicle with level control device
Véhicule avec appareil de commande de niveau

(30) Priorität: 16.06.1989 DE 3919816
(43) Veröffentlichungstag der Anmeldung: 19.12.1990
(73) Patentinhaber: BARMAG AG, D-42862 Remscheid (DE)
(72) Erfinder: Lommerzheim, Helmut, D-5609 Hückeswagen (DE); Hertell, Siegfried, D-5608 Radevormwald (DE)
(74) Vertreter: Pfingsten, Dieter, Dipl.-Ing.

(56) Entgegenhaltungen:
- DE-A- 1 655 963
- DE-A- 3 300 662
- DE-A- 3 507 550
- GB-A- 1 155 419
- Design Engineering, May 1979, Fluid Power its place in car design S. 59-65

## Beschreibung

Die Erfindung betrifft ein Kraftfahrzeug mit Niveauregeleinrichtung nach dem Oberbegriff des Anspruchs 1.

Durch die DE-A-26 36 766 ist eine Niveauregeleinrichtung bekannt, bei der die Relativlage zwischen Karosserie und Rädern durch hydraulische Verstellung von hydraulisch verstellten Federbeinen / Stoßdämpfern konstant gehalten wird. Hierzu ist Niveauregelventil vorhanden, das die Federbeine der Hinterachse über eine Druckleitung mit einer Pumpe oder einem im wesentlichen drucklosen Vorratsbehälter verbindet. Dabei kann bei der bekannten Niveauregeleinrichtung ein Quersperrventil in der Zuleitung von dem Niveauregelventil zu den beiden Federbeinen angeordnet sein. Durch dieses Quersperrventil wird gewährleistet, daß die beidseitigen Federbeine auch bei Kurvenfahrt symmetrisch gefüllt bleiben.
Derartige Quersperrventile vermögen bei Kurvenfahrt nicht zu verhindern, daß die bei Kurvenfahrt eintretende Zentrifugalkraft zu Druckunterschieden der Federbeine und damit zur Neigung der Karosserie führt.

In der DE-A-1 655 963 ist eine Regelvorrichtung für hydropneumatische Federungen von Kraftfahrzeugen beschrieben, bei denen die Last des Aufbaus ganz oder teilweise durch hydropneumatische Federelemente getragen wird. Dabei wird der Abstand zwischen Achse und Aufbau durch mittels einer Kolbenpumpe erfolgendes Zuführen von Öl aus einem Ölbehälter in die Federelemente bzw. durch Ablassen von Öl aus den Federelementen in den Ölbehälter geregelt. Hierzu hat der Pumpenzylinder in der Zylinderwand Steuerschlitze, die mit dem Ölbehälter in Verbindung stehen. Die Schlitze sind im Hubbereich des inneren Totpunktes geöffnet und im übrigen Bereich vom Pumpenkolben abgedeckt. Weiter sind ein in den Pumpenzylinder mündendes, das durch die Regelung abgelassene Öl aufnehmendes Leitungsstück sowie in Richtung eines oder mehrerer Federelemente öffnende Rückschlagventile vorgesehen.

Eine weitere Niveauregeleinrichtung ist in "Design Engineering, May 1979, Fluid Power its place in car design. P. 59-65" beschrieben. Bei dieser ist das Federbein jedes Rades der Vorderachse mit einem Federelement und einem Niveauregelventil ausgestattet, während die hydraulischen Federbeine der Hinterachse mit einem gemeinsamen Federelement mit zugeordnetem Niveauregelventil in Verbindung stehen. Die Besonderheit besteht darin, daß der bei dem vorderen Federbein einer Fahrzeugseite über seinem Kolben liegende Zylinderabschnitt über eine Fluidleitung mit dem unter dem Kolben liegenden Zylinderabschnitt des hinteren Federbeins der jeweils anderen Fahrzeugseite verbunden ist. Dadurch soll erreicht werden, daß die Bewegungen der jeweils über Kreuz liegenden Federbeine synchronisiert sind und gleichzeitig und in gleicher Weise ablaufen.

Von dem zuletzt beschriebenen Stand der Technik ausgehend ist es Aufgabe der Erfindung, ein Kraftfahrzeug mit einer Niveauregeleinrichtung auszurüsten, die der bei Kurvenfahrt eintretenden Neigung der Karosserie entgegenwirkt, indem sie die Neigung ausgleicht und bevorzugt sogar zu einer entgegengesetzten Neigung führt.

Die Lösung ergibt sich aus dem Kennzeichen des Anspruchs.

Dabei wird neben der Höhenlage der Karosserie auch die Axiallage der Karosserie relativ zu den Rädern zur Verstellung des Niveauregelventils benutzt. Das jeweilige Niveauregelventil wird so verstellt, daß die bei Kurvenfahrt unter der Einwirkung der Fliehkraft entstehende Neigung der Karosserie nach außen ausgeglichen oder sogar überkompensiert wird. Dabei ist die Erfindung in der Ausführung nach Anspruch 2 insbesondere einsetzbar für Kraftfahrzeuge mit sog. Schräglenkerachsen.

Im folgenden wird die Erfindung anhand eines Ausführungsbeispiels beschrieben.

Es zeigen :
- Fig. 1: die Ansicht der Hinterachse eines Kraftfahrzeugs nit angelenkten Niveauregelventilen;
- Fig. 2, 3: schematische Darstellungen (links Seitenansicht, rechts Draufsicht) des Fahrgestells bei

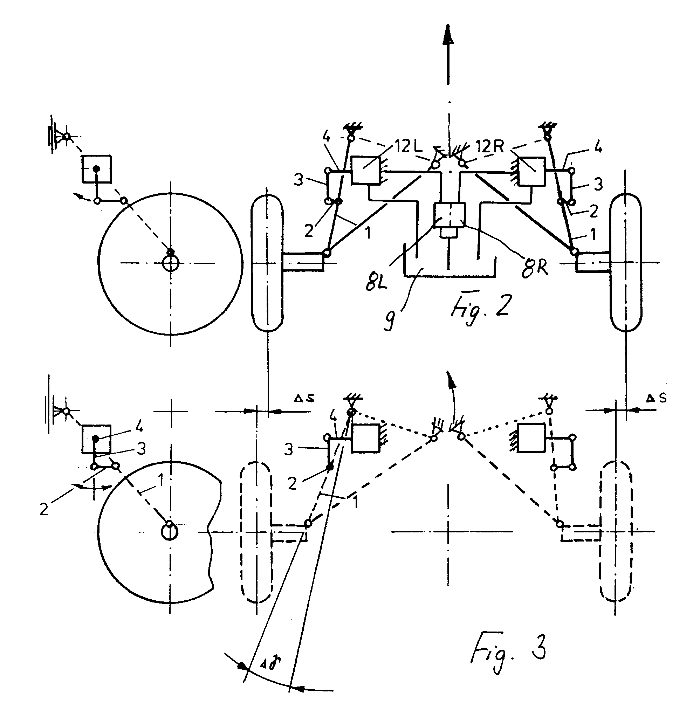

Fig. 2: Geradeausfahrt
Fig. 3: Kurvenfahrt nach links.

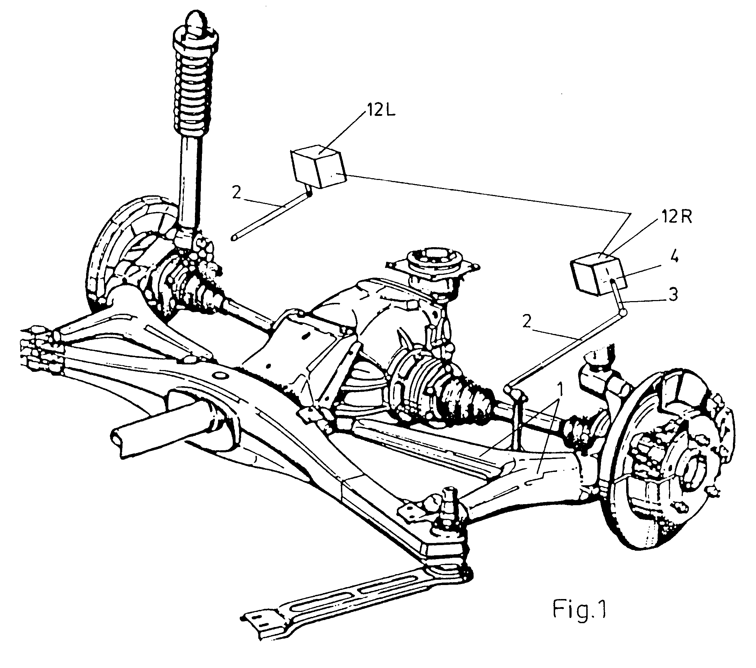

In der schematischen Darstellung nach den Fig. 1 bis 3 ist eine Schräglenker-Hinterachse dargestellt. Jedem Hinterrad ist ein Niveauregelventil 12 zugeordnet. Jedes Niveauregelventil ist z.B. an der Karosserie 13 befestigt. Ein geeignetes Niveauregelventil ist z.B. in der DE-C-29 32 298 dargestellt. Jedes Niveauregelventil wird mit einer separaten Pumpe 8 L bzw. 8 R durch jeweils eine Druckleitung verbunden. Gleichwertig mit dem Einsatz von zwei separaten Pumpen ist die Verwendung einer Mehrkreispumpe. Dabei handelt es sich um eine Pumpe, die in einem Gehäuse und mit einem Antrieb zwei oder mehr Pumpelemente vorsieht, durch die die beiden Druckleitungen unabhängig voneinander mit Öl beschickt werden. Eine solche Mehrkreispumpe kann z.B. eine Radialkolbenpumpe sein, in der zwei Scheiben mit Radialzylindern und Radialkolben vorgesehen sind, die jeweils mit separaten Druckleitungen in Verbindung stehen, jedoch durch eine gemeinsame Exzenterwelle angetrieben werden. Eine solche Bauart ist z.B. in der DE-A-39 30 248 gezeigt. Jedes der Niveauregelventile 12 L und 12 R ist durch je eine Rücklaufleitung oder eine gemeinsame Rücklaufleitung mit dem im wesentlichen drucklosen Vorratsbehälter/ Tank des Hydrauliksystems verbunden.

Jedes Niveauregelventil besitzt eine drehbare Schieberwelle 4, durch welche die Relativbewegung zwischen Karosserie und Rad auf den Schieber des Niveauregelventils übertragen wird. Hierzu ist die Schieberwelle mit einem Stellhebel 3 fest verbunden. An das freie Ende des Stellhebels 3 ist eine Koppelstange 2 angelenkt. Das andere Ende der Koppelstange 2 ist über eine Anlenkung mit dem Schräglenker 1 der Hinterachse fest verbunden.
Die geometrische Aufhängung des Schräglenkers an der Karosserie ergibt sich aus der schematischen Ansicht nach Fig. 1. Diese Ansicht zeigt, daß die Schwenkachse des Schräglenkers nicht senkrecht zur Fahrtrichtung liegt. Im einzelnen wird hierzu auf das Buch "Fahrwerktechnik: Radaufhängungen", Reimpell, Vogel-Buchverlag 1986, S. 315 ff, verwiesen. Bei derartigen Schräglenkerachsen führt der Schräglenker bei Federbewegungen des Hinterrades eine Bewegung aus, die eine vertikale Komponente, eine horizontale Komponente in Fahrtrichtung und eine horizontale Komponente seitwärts, d.h. axial oder senkrecht zur Fahrtrichtung hat.

Erfindungsgemäß wird die Aufwärts- bzw. Abwärtsbewegung der Schräglenker zur Steuerung der Niveauregelventile herangezogen. Verschiebt sich einer der Schräglenker relativ zur Karosserie, so wird das mittels der zugeordneten Pumpe geförderte Öl über das zugeordnete Niveauregelventil in das zugeordnete Federbein gepumpt, bis die Sollage der Karosserie wieder erreicht ist, d.h. bis der konstruktiv vorgegebene Abstand der Karosserie zur Achse wieder erreicht ist. Senkt sich der Schräglenker relativ zur Karosserie, so wird Öl aus dem zugeordneten Federbein entnommen und zum Tank zurückgeführt. Durch den Umstand, daß jedem Rad eine separate Niveauregelanlage zugeordnet ist, wird die Lage am linken und am rechten Federbein auch bei unterschiedlichen Lasten genauestens erfaßt und ausgeregelt. Demgegenüber erfolgt die Niveauregelung bei einem durch nur ein Niveauregelventil ausgeregelten Fahrzeug mittels eines mittleren Regelabgriffes. Dadurch ist nach dem Stand der Technik kein seitlicher Niveauausgleich möglich. Bei der Niveauregelung durch zwei unabhängige Niveauregelkreise steht die Karosserie immer gerade. Gleichzeitig wird die Funktion des bisher üblichen Quersperrventils erfüllt. Ferner wird es durch die schräge Anlenkung der Räder möglich, nicht nur die Höhenänderung des Rades relativ zur Karosserie, sondern auch die horizontale Lageänderung zu erfassen, indem auch die seitliche Bewegung des Schräglenkers auf den Stellhebel des Niveauregelventils übertragen wird. Zu einer solchen seitlichen Bewegung kommt es insbesondere bei Kurvenfahrt. Vorraussetzung für die Erfassung dieser Seitwärtsbewegung ist, daß die Koppelstange 2, die den Schräglenker mit dem Stellhebel 3 des Niveauregelventils 12 L bzw. 12 R verbindet, nicht genau in der Bewegungsebene des Stellhebels, sondern räumlich dazu angeordnet ist. Daher erfolgt bei Lageänderung des Rades und die dadurch bewirkte Seitwärtsbewegung des Anlenkpunktes des Schräglenkers 1 auch eine Verstellung der Stellhebel 3 der Niveauregelventile, und zwar gegensätzlich.

Die Ausnutzung der Seitwärtsbewegung der Schräglenker hat nun folgenden Vorteil: Wenn lediglich die horizontale Bewegung des Rades relativ zur Karosserie erfaßt wird, so führt dies bei Kurvenfahrt und Anwendung der Erfindung dazu, daß die durch Fliehkraft hervorgerufene seitliche Neigung der Karosserie als zusätzliche Last von dem Niveauregelventil erfaßt und durch Aufpumpen des zugeordneten Federbeins wiederausgelichen wird. Dieser Ausgleichbewegung kann durch Erfassung der Seitswärtsbewegung eine zusätzliche Steuerbewegung des Niveauregelventils i.S. einer Addition überlagert werden, was dazu führt, daß die Karosserie eine Neigung von der Außenseite zur Innenseite der Kurve erhält. Zur Niveauregelung wird also nicht nur der Höhenvektor, sondern auch der Fliehkraftvektor der Fahrwerksbewegung benutzt. Bei Geradeausfahrt wird der Fliehkraftvektor zu Null und die Niveauregelung arbeitet in der gewohnten Weise.

Nach der Erfindung sind also an allen vier Rädern autarke, d.h. mit einer eigenen Druckölversorgung und -regelung versehene Niveauregelsysteme vorhanden. Dadurch können auch in der Ausführung nach Anspruch 1 sämtliche Wank- und Rollneigungen des Fahrzeugs erfaßt und ausgeregelt werden, da die relative Höhenlage zwischen jedem Rad und der Karosserie selbständig erfaßbar ist. Darüber hinaus ist es aber entsprechend der Lehre nach Anspruch 2 bei schräg angelenkten Achsen auch vorteilhaft, wenn - bezogen jeweils auf die Vorderachse und die Hinterachse - die Stellhebel der beiden zugeordneten Niveauregelventile durch jeweils eine Koppelstange mit einem Anlenkpunkt des Schräglenkers verbunden sind, welcher bei Auf- und Abbewegung des Rades auch eine axiale Relativbewegung relativ zu der Karosserie ausführt. Dabei ist es bei üblichen Bauarten von Niveauregelventilen, vgl. DE-A-29 32 298, so, daß die Anlenkpunkte an den Stellhebeln der Niveauregelventile einer Achse - in der Draufsicht und im gleichbelasteten Zustand der Räder - außerhalb der Anlenkpunkte der jeweiligen Koppelstangen an den Schräglenkern liegen. Im gleichbelasteten Zustand bilden also die Koppelstangen einer Achse die gleichlangen, gegensinnig geneigten Seiten eines regelmäßigen Trapezes, dessen kleinere, parallele Seite durch die Anlenkpunkte an dem Schräglenker und dessen größere parallele Seite durch die Anlenkpunkte an dem Stellhebel der Niveauregelventile aufgespannt wird.

Hierdurch wird erreicht, daß die axiale Relativverschiebung in der Kurve das Niveauregelventil in demselben Sinne beeinflußt wie die in der Kurve eintretenden Änderungen der relativen Höhenlage.

### BEZUGSZEICHENAUFSTELLUNG

- 1: Anlenkung an Schräglenker der Hinterachse
- 2: Koppelstange
- 3: Stellhebel des Niveauregelventils
- 4: Schieberwelle des Niveauregelventils
- 5: Schräglenker
- 6: Rad
- 7: Karosserie
- 8: Pumpe
- 9: Tank
- 10: Druckleitung
- 11: Rücklaufleitungen
- 12: Niveauregelventil
- 13: Karosserie

## Patentansprüche

1. Kraftfahrzeug mit Einrichtungen zum Konstanthalten der Relativlage zwischen Karosserie und Rädern mit Hilfe hydraulisch verstellbarer hydraulischer Federbeine, mit Niveauregelventilen, die einerseits mit den Achsträgern oder der Karosserie und andererseits über Stellhebel mit den Achsen verbunden sind und die Federbeine abhängig von den Bewegungen der Stellhebel mit einer Druckleitung oder einem im wesentlichen drucklosen Vorratsbehälter hydraulisch verbinden,
dadurch gekennzeichnet, daß
dem Federbein jedes Rades (6) des Kraftfahrzeugs ein aus einem Pumpenelement (8) sowie dem Niveauregelventil (12) bestehendes autarkes Niveauregelsystem zugeordnet ist und jedes Niveauregelventil (12) unabhängig von den anderen Niveauregelventilen (12) über das separate Pumpenelement (12) mit Drucköl versorgbar ist, wobei
die Stellhebel (3) der Niveauregelventile (12) mit jeweils einem zur Fahrtrichtung querbeweglichen Element der Radaufhängung (1) durch ein Gestänge (2) derart verbunden sind, daß die Verringerung des Abstands zwischen der senkrechten Längsebene der Karosserie und dem Rad zur Verstellung des zugeordneten Niveauregelventils (12) im Sinne einer Vergrößerung des vertikalen Abstands zwischen Rad und Karosserie führt.

## Claims

1. Motor vehicle having devices for holding the relative position between body and wheels constant with the aid of hydraulically adjustable hydraulic suspension struts, having level control valves which are connected on the one hand to the axle brackets or the body and on the other hand via adjusting levers to the axles and hydraulically connect the suspension struts, in dependence upon the movements of the adjusting levers, to a pressure line or a substantially unpressurized storage tank,
characterized in that
an autonomous level control system comprising a pump element (8) and the level control valve (12) is associated with the suspension strut of each wheel (6) of the motor vehicle and each level control valve (12) may be supplied independently of the other level control valves (12) with pressure oil via the separate pump element (12),
the adjusting levers (3) of the level control valves (12) being in each case connected to an element of the wheel suspension (1), which is movable perpendicular to the direction of travel, by a linkage (2) in such a way that the reduction in the clearance between the perpendicular longitudinal plane of the body and the wheel leads to the adjustment of the associated level control valve (12) in the sense of an increase in the vertical clearance between wheel and body.

## Revendications

1. Véhicule automobile comprenant des dispositifs pour maintenir constante la position relative entre la carrosserie et les roues à l'aide de jambes élastiques hydrauliques réglables hydrauliquement, et à l'aide de valves de régulation de niveau qui sont reliées d'une part aux supports d'essieu ou à la carrosserie et d'autre part par des leviers de réglage aux essieux et qui relient les jambes élastiques hydrauliquement, en fonction des mouvements des leviers de réglage, à une conduite sous pression ou à un réservoir essentiellement sans pression,
caractérisé par le fait que
un système de régulation de niveau autonome comprenant un élément de pompe (8) ainsi que la valve de régulation de niveau (12) est associé à la jambe élastique de chaque roue (6) du véhicule automobile et chaque valve de régulation de niveau (12) peut être alimentée,
indépendamment des autres valves de régulation de niveau (12), en huile sous pression par l'élément de pompe séparé (12),
les leviers de réglage (3) des valves de régulation de niveau (12) étant reliés par une timonerie (2) chacun à un élément de la suspension de roue (1), lequel est déplaçable transversalement à la direction de marche, de telle manière que la diminution de la distance entre le plan longitudinal vertical de la carrosserie et la roue conduise à une commande de la valve de régulation de niveau (12) associée dans le sens d'une augmentation de la distance verticale entre la roue et la carrosserie.
